# EUROPEAN PATENT SPECIFICATION

(11) **EP 2 918 428 B1**
(45) Date of publication and mention of the grant of the patent: **20.06.2018**
(21) Application number: 13853242.9
(22) Date of filing: 04.10.2013
(51) Int. Cl.: B60C 13/00, B60C 1/00, B60C 13/04

(54) **TIRE**
REIFEN
PNEUMATIQUE

(30) Priority: 08.11.2012 JP 2012246510
(43) Date of publication of application: 16.09.2015
(73) Proprietor: Bridgestone Corporation, Tokyo 104-8340 (JP)
(72) Inventor: TOKUTAKE, Satoshi, Kodaira-shi Tokyo 187-8531 (JP)
(74) Representative: Oxley, Robin John George
(86) International application number: PCT/JP2013/005938
(87) International publication number: WO 2014/073157

(56) References cited:
- DE-A1- 3 924 459
- JP-A- S5 914 502
- JP-A- H04 121 205
- JP-A- H10 202 765
- CAR WATCH HENSHUBU ET AL.: 'Full Color Tire Insatsu Gijutsu o Happyo Kaihatsu Code Name wa 'Pandora' Simple na Design mo, Mochiron Jitsugen Kano. Kaiten Buttai no Tame, Sense ga Hitsuyo ni Naru kamo Shirenai' CARWATCH HOMEPAGE 13 January 2012, XP055261172 Retrieved from the Internet: <URL:http://car.watch.impress.co.jp/ img/car/docs/504/481/html/19.jpg.html> [retrieved on 2013-11-11]

## Description

### TECHNICAL FIELD

The disclosure relates to a tire including a paint layer exposed on the outer surface of at least a part of a sidewall portion.

### BACKGROUND

Tires in which a paint layer is disposed on the outer surface of a side portion to form a decorative part or the like on the outer surface of the side portion are widely used. To prevent the decorative part from being stained and discolored by an antioxidant exuding from the surrounding rubber in such tires, a known technique isolates the decorative part from the sidewall rubber containing the antioxidant by disposing a non-staining or slightly-staining sidewall innerlayer rubber not containing any staining antioxidant, as described in Patent Literature (PTL) 1.

### CITATION LIST

### Patent Literature

PTL 1: JP H4-121205 A. Attention is also drawn to the disclosures of JP10-202765, JP59-14502 and DE3924459.

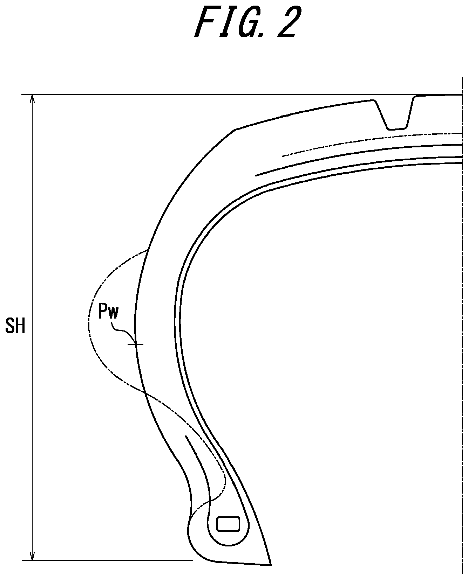

For improved visibility of the decorative part, the decorative part is preferably located outward in the tire radial direction relative to a tire maximum width position Pw illustrated in FIG. 2.

FIG. 2 exaggeratedly illustrates how a sidewall portion of a tire is distorted (deformed) when the tire rolls under a load, by an imaginary line. As illustrated in the drawing, the distortion of the tire when rolling under a load has its peak near the tire maximum width position Pw, and decreases inward in the tire radial direction relative to the tire maximum width position Pw. There is thus a problem in that, when the decorative part is located near the tire maximum width position to improve the visibility of the decorative part, the decorative part tends to peel off especially at its tire radial outermost end.

Tires having thinner sidewall portions to reduce rolling resistance and flatter tires to improve cornering performance have been proposed in recent years. In these tires, the distortion of the sidewall portion is greater, and so the above-mentioned problem is more significant.

It could therefore be helpful to provide a tire that can improve the visibility of a paint layer while preventing the paint layer from being stained by an antioxidant or peeling.

### SUMMARY

The tire includes: a tread portion that comes into contact with a road surface; a sidewall portion connected to the tread portion; a bead portion connected to an inner side of the side wall portion in a tire radial direction; at least one carcass ply including: a body portion toroidally extending from the tread portion through the sidewall portion to the bead portion; and a folded portion connected to the body portion and folded around the bead portion and a belt arranged on the outer periphery of the carcass ply, wherein at least a part of the sidewall portion includes: a stain preventive rubber layer containing no antioxidant; and a paint layer adjacent to the stain preventive rubber layer and exposed on an outer surface of the sidewall portion, a tire radial outermost end of the paint layer is away from a bead toe outward in the tire radial direction by 65% or more of a tire cross-sectional height, a tire radial outermost end of the stain preventive rubber layer is located outward in the tire radial direction relative to the tire radial outermost end of the paint layer, and wherein a folded end of the carcass ply overlaps the belt in a tire width direction, and extends to an inner side in the tire radial direction.

In the specification and claims, the position of the tire radial outermost end of the paint layer and the like are assumed to be measured in a state where the tire is attached to an applicable rim, filled to a predetermined internal pressure, and placed under no load, unless otherwise noted.

The "tire cross-sectional height" is a half of the difference between the outer diameter of the tire and the rim diameter of the applicable rim.

The "applicable rim" is a rim determined for each tire by an effective industrial standard in areas where tires are produced or used, and is a standard rim in the Japan Automobile Tyre Manufacturers Association (JATMA), a design rim in the Tire and Rim Association, Inc. (TRA), and a measuring rim in the European Tyre and Rim Technical Organisation (ETRTO).

The "predetermined internal pressure" is the applied air pressure (highest air pressure) corresponding to the maximum load capacity of the tire as defined in the above-mentioned standard such as JATMA depending on the tire size. The "maximum load capacity" is the maximum mass permitted to be loaded onto the tire in the above-mentioned standard.

The "air" mentioned here may be substituted by nitrogen gas or other inert gas.

In the specification and claims, the "tread ground contact end" is the tire widthwise outermost point of the tire surface in contact with the ground when the tire attached to the applicable rim is placed under the load of the maximum load capacity, in a cross section in the tire width direction.

It is possible to improve the visibility of a paint layer while preventing the paint layer from being stained by an antioxidant or peeling.

### BRIEF DESCRIPTION OF THE DRAWINGS

In the accompanying drawings:
FIG. 1 is a sectional view of a tire half in the tire width direction in a state where a tire is attached to the applicable rim, filled to the predetermined internal pressure, and placed under no load;
FIG. 2 is a sectional view of a tire half in the tire width direction, exaggeratedly illustrating how the outer surface of a side portion is deformed when the tire rolls under a load;
FIG. 3 is a sectional view of a tire half in the tire width direction in a state where a tire is attached to the applicable rim, filled to the predetermined internal pressure, and placed under no load; and
FIG. 4 is a sectional view of a tire half in the tire width direction in a state where a tire according to an embodiment of the present invention is attached to the applicable rim, filled to the predetermined internal pressure, and placed under no load.

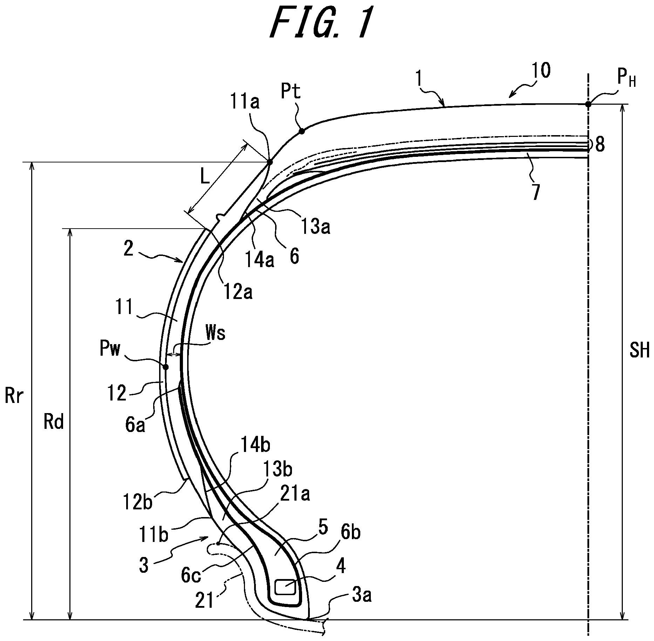

   Fig. 1 to 3 are not according to the present invention but are useful to understand it.

### DETAILED DESCRIPTION

Note that the following description is merely illustrative, and the features and functional effects of members and the like are non-limiting.

A tire 10 illustrated in FIG. 1 includes: a tread portion 1 that comes into contact with the road surface; each sidewall portion 2 connected to the inner end of the respective side part of the tread portion 1 in the tire radial direction and extending inward in the tire radial direction; and each bead portion 3 connected to the inner end of the respective sidewall portion 2 in the tire radial direction. The bead portion 3 includes a bead core 4 for holding a carcass ply 6, and a bead filler 5 located on the outer side of the bead core 4 in the tire radial direction.

The tire 10 includes the carcass ply 6 extending between the pair of bead portions 3 and capable of being radially placed. The carcass ply 6 toroidally extends between the pair of bead portions 3 from the tread portion 1 through the pair of sidewall portions 2 to the pair of the bead portions 3, and is held by, for example, being folded from inside to outside in the tire width direction around the bead core 4 buried in each bead portion 3. In the following description, the part of the carcass ply 6 from the tread portion 1 to the folding position is referred to as a body portion 6b, and the part of the carcass ply 6 from the folding position onward as a folded portion 6c.

An inner liner 7 is provided on the inner peripheral side of the carcass ply 6.

The sidewall portion 2 of the tire 10 includes: a stain preventive rubber layer 11 containing no antioxidant; a paint layer 12 adjacent to the stain preventive rubber layer 11 and exposed on the outer surface of the sidewall portion; and rubber layers 13a and 13b containing an antioxidant and respectively adjacent to the tire radial outer and inner parts of the stain preventive rubber layer 11. The paint layer 12 is isolated from the rubber layers 13a and 13b by the stain preventive rubber layer 11.

Though not illustrated, the paint layer 12 may form marks such as characters, figures, signs including barcode, and patterns in the tire circumferential direction.

The paint layer 12 may be of any color.

For example, the paint layer 12 may be formed by directing, onto the surface of the stain preventive rubber layer 11 of the tire after vulcanization molding, a jet of paint including ink from the head of an inkjet printer to print the paint on the surface. A plurality of types of paints may be overlaid to form the paint layer 12.

As the paint forming the paint layer 12, UV-curable inks are particularly preferable since UV-curable inks have high strength after cured, and have good durability against ink peeling, i.e. the paint layer peeling off due to rubbing or the like while the tire runs. UV-curable inks also have good adhesion to the stain preventive rubber layer.

The rubber composition forming the stain preventive rubber layer 11 may be prepared using a component typically used for preparing the rubber composition of tires, but does not include any antioxidant. In other words, the stain preventive rubber layer is a rubber layer that contains no antioxidant and at least does not stain its adjacent paint layer by contained antioxidant.

By forming the stain preventive rubber layer 11 from such a rubber composition, the antioxidant included in the rubber layers 13a and 13b is kept from reaching the paint layer 12 to thereby effectively prevent the paint layer 12 from being stained.

Examples of the rubber component of the stain preventive rubber layer 11 include natural rubber (NR), butyl rubber (IIR), halogenated butyl rubber, isoprene rubber (IR), butadiene rubber (BR), styrene-butadiene rubber (SBR), chloroprene rubber (CR), acrylonitrile-butadiene rubber (NBR), and ethylene-propylene-diene terpolymer (EPDM). These components may be added alone or in combination of two or more types. In the case where the stain preventive rubber layer 11 includes ethylene-propylene-diene terpolymer, the proportion of the ethylene-propylene-diene terpolymer in the stain preventive rubber layer is preferably 80 parts by weight or more per 100 parts by weight the rubber component.

The inclusion of butyl-based rubber in the stain preventive rubber layer 11 reduces the antioxidant passing though the stain preventive rubber layer 11, thus preventing the paint layer 12 from being stained by the antioxidant included in the rubber layers 13a and 13b.

In the case where the stain preventive rubber layer 11 includes an inorganic clay mineral, the antioxidant passing though the stain preventive rubber layer 11 is further reduced to enhance the effect of preventing the paint layer 12 from being stained by the rubber layers 13a and 13b.

Typically, the paint layer starts to peel off from its end.

Accordingly, in the tire 10, the tire radial outermost end 12a of the paint layer 12 is away from a bead toe 3a outward in the tire radial direction by 65% or more of the tire cross-sectional height SH, as illustrated in FIG. 1.

The tire radial outermost end 12a of the paint layer 12 is thus separated from the area where large distortion occurs when the tire rolls under a load (the area outward in the tire radial direction from the bead toe 3a by 55% or less of the tire cross-sectional height SH). This prevents the paint layer 12 from peeling off at the tire radial outermost end 12a, and also improves the visibility and decorativeness of the paint layer 12.

Moreover, the tire radial outermost end 12a of the paint layer 12 is away from the tire radial outermost end PH of the tread portion 1 inward in the tire radial direction by 8 mm or more. This effectively prevents the paint layer 12 from peeling off as a result of contact with a curb or the like.

To dispose the stain preventive rubber layer having a sufficient thickness between the paint layer and the tread rubber or rubber chafer containing the antioxidant, the periphery length L between the tire radial outermost end 11a of the stain preventive rubber layer 11 and the tire radial outermost end 12a of the paint layer 12 along the outer surface of the stain preventive rubber layer in the cross section in the tire width direction is preferably 10 mm or more.

If a plurality of ends (the tire radial outermost end 11a of the stain preventive rubber layer 11 and the tire radial outermost end 12a of the paint layer 12) are close to each other on the outer surface of the tire side portion which is susceptible to distortion, stress concentrates between the ends 11a and 12a of the respective layers near the outer surface of the tire side portion, causing the end of the paint layer to peel off more easily. Setting the periphery length L to 10 mm or more, on the other hand, improves the peeling resistance of the paint layer.

Setting the periphery length L to 10 mm or more also effectively prevents the paint layer from being stained by the antioxidant.

The shortest distance between the surface of the paint layer 12 and the surface of the rubber layer 13a is preferably 7 mm or more. By securing such a staining distance (the distance in which the antioxidant moves and stains in the rubber) in the stain preventive rubber layer, brownish discoloration may be suppressed effectively.

The paint layer 12 also tends to peel off at the tire radial innermost end 12b.

Accordingly, the tire radial innermost end 12b of the paint layer 12 is located inward in the tire radial direction relative to the tire maximum width position Pw where large distortion occurs when the tire rolls under a load. The peeling of the paint layer 12 can be effectively prevented in this way.

In the tire in fig. 1, the tire radial outermost end 11a of the stain preventive rubber layer 11 is located outward in the tire radial direction relative to the tire radial outermost end 12a of the paint layer 12.

By interposing the stain preventive rubber layer between the rubber layer containing the antioxidant and the paint layer near the tire radial outermost end of the paint layer in this way, the antioxidant is kept from reaching the paint layer, so that the paint layer can be prevented from being stained by the antioxidant.

More preferably, the tire radial innermost end 11b of the stain preventive rubber layer 11 is located inward in the tire radial direction relative to the tire radial innermost end 12b of the paint layer 12. Thus, the paint layer may be prevented from being stained by the antioxidant near its tire radial innermost end.

Large stress acts on the ground contact surface of the tire. The tire radial outermost end 11a of the stain preventive rubber layer 11 is accordingly located inward in the tire radial direction relative to the tread ground contact end Pt, to suppress the occurrence of large stress near the adhesion interface 14a between the stain preventive rubber layer 11 and the rubber layer 13a. Hence, peeling at the adhesion interface 14a may be prevented effectively.

Large distortion occurs near the folded end 6a of the carcass ply 6 when the tire rolls under a load. The tire radial outermost end 11a and/or tire radial innermost end 11b of the stain preventive rubber layer 11 is accordingly away from the folded end 6a of the carcass ply 6 in the tire radial direction by 5 mm or more. This prevents peeling at the adhesion interface 14a or 14b more effectively.

In the case where the maximum thickness Ws of the stain preventive rubber layer 11 is limited to 3 mm or less to lessen the rolling resistance of the whole tire 10, the distortion of the stain preventive rubber layer 11 when the tire rolls under a load is especially large. The disclosed tire may be effectively applied to such a case.

The thickness of the stain preventive rubber layer 11 mentioned here is measured in the direction normal to the inner surface of the stain preventive rubber layer 11 in the tire width direction, in the cross section in the tire width direction.

Upon mounting the tire 10 on a vehicle, the tire 10 is attached to a rim flange 21 indicated by an imaginary line in FIG. 1. Here, friction occurs at the contact surface between the tire 10 and the rim flange 21, and also large stress occurs near the contact surface.

To prevent the paint layer 12 from peeling and also prevent the stain preventive rubber layer 11 and the rubber layer 13b from peeling at the adhesion interface 14b, the tire radial innermost end 11b of the stain preventive rubber layer 11 and the tire radial innermost end 12b of the paint layer 12 are preferably located outward in the tire radial direction relative to the tire radial outermost end 21a of the rim flange 21.

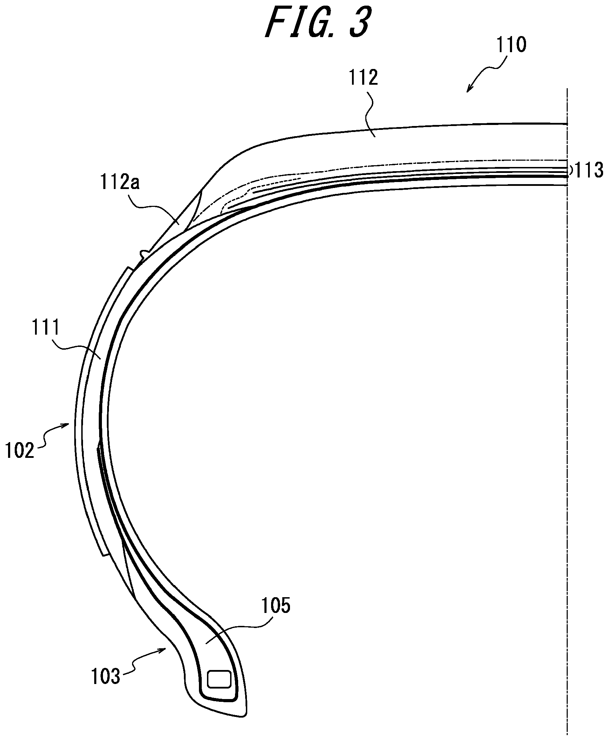

FIG. 3 illustrates another tire. In a tire 110 in FIG. 3, a side rubber 111 disposed in a sidewall portion 102 extends to the inner side of a tread rubber 112 in the tire radial direction, i.e. the inner side of a belt 113 in the tire radial direction in this example. Moreover, the tread rubber 112 has a mini side rubber 112a on the outer side in the tire width direction. The side rubber 111 and the mini side rubber 112a contain no antioxidant, and function as the above-mentioned stain preventive rubber layer.

The tire in fig. 3 may be manufactured easily. A product tire is typically manufactured by molding a raw casing including side rubbers and carcass plies, arranging a belt layer member and a tread rubber member on the outer periphery of the raw casing to form a green casing, and vulcanizing the green casing. With the feature described above, the mini side rubber may be easily exposed on the outer surface of the tire, so that the tire with the stain preventive rubber layer extending to near the tread portion may be manufactured easily.

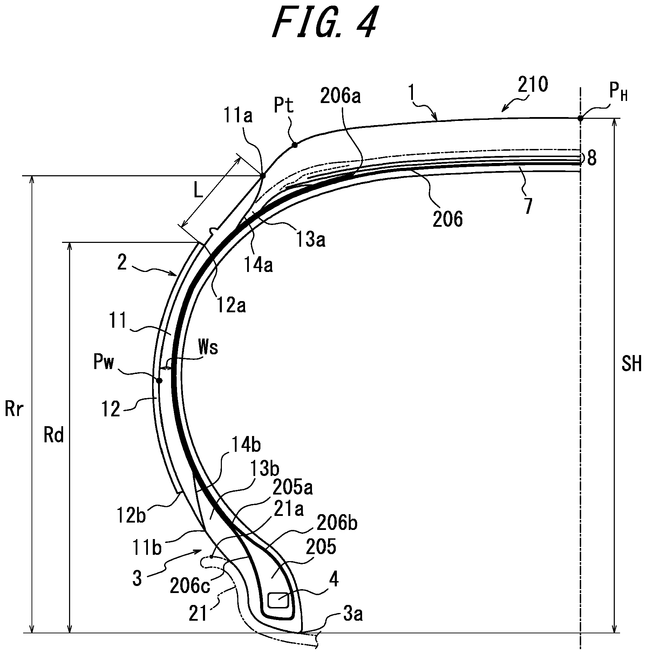

FIG. 4 illustrates a tire according to an embodiment of the present invention. In a tire 210 in FIG. 4, a folded portion 206c of a carcass ply 206 extends outward in the tire radial direction relative to the tire radial outermost end 12a of the paint layer 12. A folded end 206a of the carcass ply 206 overlaps a belt 8 in the tire width direction, and extends to the inner side in the tire width direction.

A body portion 206b and the folded portion 206c of the carcass ply 206 overlap each other outward in the tire radial direction relative to a position 205a. The position 205a corresponds to the tire radial outermost end of a bead filler 205 sandwiched between the body portion 206b and the folded portion 206c, which is located inward in the tire radial direction relative to the tire radial innermost end 12b of the paint layer 12.

The other structure of the tire 210 is the same as that of the tire 10 illustrated in FIG. 1.

Large distortion occurs around the folded end 206a of the carcass ply 206 when the tire rolls under a load. In the tire 210 in this embodiment, the folded end 206a of the carcass ply 206 is located outward in the tire radial direction relative to the tire radial outermost end 12a of the paint layer 12, with it being possible to further suppress the peeling of the paint layer 12 at the tire radial outermost end 12a and other positions.

Alternatively, the folded end of the carcass ply 206 may be located inward in the tire radial direction relative to the tire radial innermost end 12b of the paint layer 12, to further suppress the peeling of the paint layer 12 at the tire radial innermost end 12b and other positions.

In this embodiment, the folded end 206a of the carcass ply 206 overlaps the belt 8 in the tire width direction, and extends to the inner side in the tire radial direction. With this feature, the folded end 206a of the carcass ply 206 is pressed by the belt 8. This lessens the distortion occurring at the tire radial outermost end 12a of the paint layer 12 when the tire rolls under a load, and further suppresses the peeling of the paint layer 12 at the tire radial outermost end 12a.

Large distortion occurs around the bead filler 205 when the tire rolls under a load. In the tire 210 in this embodiment, the tire radial outermost end 205a of the bead filler 205 is accordingly located inward in the tire radial direction relative to the tire radial innermost end 12b of the paint layer 12. This prevents the paint layer 12 from peeling off due to the distortion around the bead filler 205, thus further improving the peeling resistance of the paint layer 12.

In addition, the tire radial outermost end 205a of the bead filler 205 is located at a position of 15% to 25% of the tire cross-sectional height SH from the bead toe 3a outward in the tire radial direction. Thus, while ensuring the bending stiffness of the sidewall portion 2, the distortion occurring near the tire radial innermost end 12b of the paint layer 12 when the tire rolls under a load is reduced to further improve the peeling resistance of the paint layer 12.

Although the disclosed feature is applied to the tire half and particularly the outer half of the tire mounted on a vehicle in the three embodiments described above, the disclosed feature may be applied to both sides of the tire.

### EXAMPLES

Example tires having a tire size of 195/65R15 and comparative example tires having a tire size of 195/65R15 were produced experimentally, and their performance were evaluated. This is described below.

Each of the example tires and comparative example tires was provided with, at its sidewall portion 2, the stain preventive rubber layer 11 containing no antioxidant, the paint layer 12 adjacent to the stain preventive rubber layer 11 and exposed on the outer surface of the sidewall portion, and the rubber layers 13a and 13b containing an antioxidant and respectively adjacent to the outer and inner sides of the stain preventive rubber layer 11 in the tire radial direction, as illustrated in FIG. 4.

Table 1 shows the specifications of each of the example tires.

In each of the example tires, the tire radial outermost end of the paint layer is away from the bead toe outward in the tire radial direction by 70% of the tire cross-sectional height, and the tire radial outermost end of the stain preventive rubber layer is located outward in the tire radial direction relative to the tire radial outermost end of the paint layer. The tire radial innermost end of the paint layer is away from the bead toe outward in the tire radial direction by 25% of the tire cross-sectional height.

In each of the comparative example tires, the tire radial outermost end of the stain preventive rubber layer is away from the bead toe outward in the tire radial direction by 70% of the tire cross-sectional height. In comparative example tires 1 and 2, the tire radial outermost end of the paint layer is away from the bead toe outward in the tire radial direction respectively by 60% and 55% of the tire cross-sectional height SH. In comparative example tire 3, the tire radial outermost end of the stain preventive rubber layer and the tire radial outermost end of the paint layer are at the same position in the tire radial direction. The tire radial innermost end of the paint layer is away from the bead toe outward in the tire radial direction by 25% of the tire cross-sectional height.

In example tires 1 to 8, the folded end of the carcass ply is away from the bead toe outward in the tire radial direction by 90% of the tire cross-sectional height SH, and the folded end of the carcass ply overlaps the belt in the tire width direction and extends to the inner side in the tire radial direction.

In example tire 9 and comparative example tires 1 to 3, the folded end of the carcass ply is away from the bead toe outward in the tire radial direction by 50% of the tire cross-sectional height SH.
Example tire 9 is not according to the present invention.

In example tires 1 to 7 and 9, the tire radial outermost end of the bead filler is away from the bead toe outward in the tire radial direction by 20% of the tire cross-sectional height SH.

In example tire 8 and comparative example tires 1 to 3, the tire radial outermost end of the bead filler is away from the bead toe outward in the tire radial direction by 30% of the tire cross-sectional height SH.

In each of the example tires and comparative example tires, the tire radial innermost end 11b of the stain preventive rubber layer 11 and the tire radial innermost end 12b of the paint layer 12 are located inward in the tire radial direction relative to the tire maximum width position Pw.

### (Peeling resistance evaluation test)

To evaluate peeling resistance of the paint layer, the example tires and the comparative example tires were each filled to the predetermined internal pressure according to JATMA standard, loaded to the maximum load capacity according to JATMA standard, and subjected to a drum test over 10000 km and 30000 km to check for any peeling of the paint layer. Tables 1 and 2 show the results of this evaluation.

In addition, to evaluate performance against rubbing, the example tires and the comparative example tires each mounted on a vehicle were brought into contact with curbs to check for any peeling. Tables 1 and 2 show the results of this evaluation, too.

### (Stain resistance evaluation test)

To evaluate stain resistance, the example tires and the comparative example tires were each stored in a weather meter and exposed for 48 hours to create the same state as when left outdoors for about 1 month, and checked for any discoloration of the paint layer. Likewise, the example tires and the comparative example tires were each put in the same state as when left outdoors for about 3 months, and checked for any discoloration of the paint layer. Tables 1 and 2 show the results of this evaluation.

**[Table 1]**

| | Ex. tire 1 | Ex. tire 2 | Ex. tire 3 | Ex. tire 4 | Ex. tire 5 | Ex. tire 6 | Ex. tire 7 | Ex. tire 8 | Ex. tire 9 |
|---|---|---|---|---|---|---|---|---|---|
| Tire radial distance of folded end of carcass ply from bead toe (SH) | 0.9 | 0.9 | 0.9 | 0.9 | 0.9 | 0.9 | 0.9 | 0.9 | 0.5 |
| Tire radial distance of tire radial outermost end of bead filler from bead toe (SH) | 0.2 | 0.2 | 0.2 | 0.2 | 0.2 | 0.2 | 0.2 | 0.3 | 0.2 |
| Radial distance from paint layer outer end to tread outermost end (mm) | 8 | 9 | 7 | 8 | 8 | 8 | 8 | 8 | 8 |
| Periphery length L (mm) | 10 | 10 | 10 | 9 | 11 | 11 | 11 | 10 | 10 |
| Shortest distance from rubber | 7 | 7 | 7 | 7 | 7 | 6 | 8 | 7 | 7 |
| Whether peeled (after 10000 km run) | No | No | No | No | No | No | No | No | No |
| Whether peeled (after 30000 km run) | No | No | No | Yes | No | No | No | Yes | Yes |
| Whether peeled (after contact with curb) | No | No | Yes | No | Yes | Yes | Yes | No | No |
| Whether discolored (left outdoors for 1 month) | No | No | No | No | No | No | No | No | No |
| Whether discolored (left outdoors for 3 months) | No | No | No | No | No | Yes | No | No | No |

**[Table 2]**

| | Comp. ex. tire 1 | Comp. ex. tire 2 | Comp. ex. tire 3 |
|---|---|---|---|
| Tire radial distance of folded end of carcass ply from bead toe (SH) | 0.5 | 0.5 | 0.5 |
| Tire radial distance of tire radial outermost end of bead filler from bead toe (SH) | 0.3 | 0.3 | 0.3 |
| Whether peeled (after 10000 km run) | Yes | Yes | No |
| Whether discolored (left outdoors for 1 month) | No | No | Yes |
| Whether discolored (left outdoors for 3 months) | No | No | Yes |

As is clear from Tables 1 and 2, example tires 1 to 9 in which the tire radial outermost end of the paint layer is away from the bead toe outward in the tire radial direction by 65% or more of the tire cross-sectional height and the tire radial outermost end of the stain preventive rubber layer is located outward in the tire radial direction relative to the tire radial outermost end of the paint layer were excellent in peeling resistance and stain resistance, whereas comparative example tires 1 to 3 were insufficient in at least one of peeling resistance and stain resistance.

### REFERENCE SIGNS LIST

- 1: tread portion
- 2: sidewall portion
- 3: bead portion
- 3a: bead toe
- 4: bead core
- 5: bead filler
- 6: carcass ply
- 6a: folded end
- 6b: body portion
- 6c: folded portion
- 7: inner liner
- 10: tire
- 11: stain preventive rubber layer
- 11a: tire radial outermost end
- 11b: tire radial innermost end
- 12: paint layer
- 12a: tire radial outermost end
- 12b: tire radial innermost end
- 13a, 13b: rubber layer
- 14a, 14b: adhesion interface
- 21: rim flange
- 21a: tire radial outermost end
- 102: sidewall portion
- 103: bead portion
- 110: tire
- 111: side rubber (stain preventive rubber layer)
- 112: tread rubber
- 112a: mini side rubber (stain preventive rubber layer)
- 113: belt
- 205: bead filler
- 205a: tire radial outermost end
- 206: carcass ply
- 206a: folded end
- 206b: body portion
- 206c: folded portion
- 210: tire

## Claims

1. A tire (10;110;210) comprising:
a tread portion (1) that comes into contact with a road surface;
a sidewall portion (2; 102) connected to the tread portion (1);
a bead portion (3) connected to an inner side of the side wall portion (2; 102) in a tire radial direction;
at least one carcass ply (206) including: a body portion (206b) toroidally extending from the tread portion (1) through the sidewall portion (2) to the bead portion (3); and a folded portion (206c) connected to the body portion (206b) and folded around the bead portion (3); and
a belt (8) arranged on the outer periphery of the carcass ply (206), **characterised in that** at least a part of the sidewall portion (2; 102) includes: a stain preventive rubber layer (11; 111, 112a) containing no antioxidant; and a paint layer (12) adjacent to the stain preventive rubber layer (11; 111, 112a) and exposed on an outer surface of the sidewall portion (2;102),
a tire radial outermost end (12a) of the paint layer (12) is away from a bead toe (3a) outward in the tire radial direction by 65% or more of a tire cross-sectional height,
a tire radial outermost end (11a) of the stain preventive rubber layer (11; 111, 112a) is located outward in the tire radial direction relative to the tire radial outermost end (12a) of the paint layer (12), and
a folded end (206a) of the carcass ply (206) overlaps the belt (8) in a tire width direction, and extends to an inner side in the tire radial direction.

2. The tire (210) according to claim 1,
wherein the folded end (206a) of the carcass ply (206) is located outward in the tire radial direction relative to the tire radial outermost end (12a) of the paint layer (12) or located inward in the tire radial direction relative to a tire radial innermost end (12b) of the paint layer (12).

3. The tire (210) according to claim 1 or 2,
wherein the bead portion (3) includes a bead filler (205), and
a tire radial outermost end (205a) of the bead filler (205) is located inward in the tire radial direction relative to a tire radial innermost end (12b) of the paint layer (12).

4. The tire (10; 110; 210) according to any one of claims 1 to 3,
wherein the tire radial outermost end (12a) of the paint layer (12) is away from a tire radial outermost end of the tread portion (1) inward in the tire radial direction by 8 mm or more.

5. The tire (10; 110; 210) according to any one of claims 1 to 4,
wherein the tire radial outermost end (11a) of the stain preventive rubber layer (11; 111) is located inward in the tire radial direction relative to a tread ground contact end (Pt).

6. The tire (10; 110; 210) according to any one of claims 1 to 5,
wherein a periphery length between the tire radial outermost end (11a) of the stain preventive rubber layer (11; 111, 112a) and the tire radial outermost end (12a) of the paint layer (12) along an outer surface of the stain preventive rubber layer (11; 111, 112a) in a cross section in the tire width direction is 10 mm or more.

7. The tire (10; 110; 210)according to any one of claims 1 to 6,
wherein a tire radial innermost end (12b) of the paint layer (12) is located inward in the tire radial direction relative to a tire maximum width position (Pw), and
a tire radial innermost end (11b) of the stain preventive rubber layer (11; 111)is located inward in the tire radial direction relative to the tire radial innermost end (12b) of the paint layer (12).

## Patentansprüche

1. Reifen (10; 110; 210), umfassend:
einen Laufflächenabschnitt (1), welcher in Kontakt mit einer Straßenoberfläche kommt;
einen Seitenwandabschnitt (2; 102), welcher mit dem Laufflächenabschnitt (1) verbunden ist;
einen Wulstabschnitt (3), welcher mit einer Innenseite des Seitenwandabschnitts (2; 102) in einer Reifenradialrichtung verbunden ist;
zumindest eine Karkassenlage (206), umfassend: einen Körperabschnitt (206b), welcher sich torusförmig vom Laufflächenabschnitt (1) durch den Seitenwandabschnitt (2) bis zum Wulstabschnitt (3) erstreckt; und einen gefalteten Abschnitt (206c), welcher mit dem Körperabschnitt (206b) verbunden ist und um den Wulstabschnitt (3) herum gefaltet ist; und
einen Gürtel (8), welcher auf dem Außenumfang der Karkassenlage (206) angeordnet ist,
**dadurch gekennzeichnet, dass**
zumindest ein Teil des Seitenwandabschnitts (2; 102) umfasst: eine fleckenvorbeugende Gummischicht (11; 111, 112a), welche keine Antioxidantien umfasst; und eine Lackschicht (12), welche an der fleckenvorbeugenden Gummischicht (11; 111, 112a) anliegt und auf einer Außenfläche des Seitenwandabschnitts (2; 102) freiliegt,
ein äußerstes Ende (12a) in der Reifenradialrichtung, der Lackschicht (12) von einer Wulstzehe (3a) nach außen in der Reifenradialrichtung um 65% oder mehr einer Reifenquerschnittshöhe beabstandet ist,
ein äußerstes Ende (11a) in der Reifenradialrichtung, der fleckenvorbeugenden Gummischicht (11; 111, 112a) auswärts in der Reifenradialrichtung relativ zum äußersten Ende (12a) in der Reifenradialrichtung der Lackschicht (12) angeordnet ist, und
ein gefaltetes Ende (206a) der Karkassenlage (206) den Gürtel (8) in einer Reifenbreitenrichtung überlappt und sich zu einer Innenseite in der Reifenradialrichtung erstreckt.

2. Reifen (210) nach Anspruch 1,
wobei das gefaltete Ende (206a) der Karkassenlage (206) nach außen in der Reifenradialrichtung relativ zum äußersten Ende (12a) in der Reifenradialrichtung der Lackschicht (12) angeordnet ist oder nach innen in der Reifenradialrichtung relativ zu einem innersten Ende (12b) in der Reifenradialrichtung der Lackschicht (12) angeordnet ist.

3. Reifen (210) nach Anspruch 1 oder 2,
wobei der Wulstabschnitt (3) einen Wulstfüller (205) umfasst, und
ein äußerstes Ende (205a) in der Reifenradialrichtung des Wulstfüllers (205) nach innen in der Reifenradialrichtung relativ zu einem innersten Ende (12b) in der Reifenradialrichtung der Lackschicht (12) angeordnet ist.

4. Reifen (10; 110; 210) nach einem der Ansprüche 1 bis 3,
wobei das äußerste Ende (12a) in der Reifenradialrichtung der Lackschicht (12) 8 mm oder mehr von einem äußersten Ende in der Reifenradialrichtung des Laufflächenabschnitts (1) nach innen in der Reifenradialrichtung beabstandet ist.

5. Reifen (10; 110; 210) nach einem der Ansprüche 1 bis 4,
wobei das äußerste Ende (11a) in der Reifenradialrichtung der fleckenvorbeugenden Gummischicht (11; 111) nach innen in der Reifenradialrichtung relativ zu einem Laufflächengrundkontaktende (Pt) angeordnet ist.

6. Reifen (10; 110; 210) nach einem der Ansprüche 1 bis 5,
wobei eine periphere Länge zwischen dem äußersten Ende (11a) in der Reifenradialrichtung der fleckenvorbeugenden Gummischicht (11; 111, 112a) und dem äußersten Ende (12a) in der Reifenradialrichtung der Lackschicht (12) entlang einer Außenfläche der fleckenvorbeugenden Gummischicht (11; 111, 112a) in einem Querschnitt in der Reifenbreitenrichtung 10 mm oder mehr beträgt.

7. Reifen (10; 110; 210) nach einem der Ansprüche 1 bis 6,
wobei das innerste Ende (12b) in der Reifenradialrichtung der Lackschicht (12) nach innen in der Reifenradialrichtung relativ zu einer Stelle (Pw) maximaler Reifenbreite angeordnet ist, und
ein innerstes Ende (11b) in der Reifenradialrichtung der fleckenvorbeugenden Gummischicht (11; 111) nach innen in der Reifenradialrichtung relativ zum innersten Ende (12b) in der Reifenradialrichtung der Lackschicht (12) angeordnet ist.

## Revendications

1. Bandage pneumatique (10; 110; 210), comprenant :
une partie de bande de roulement (1) entrant en contact avec la surface d'une route ;
une partie de flanc (2; 102) connectée à la partie de bande de roulement (1) ;
une partie de talon (3) connectée à un côté interne de la partie de flanc (2 ; 102) dans une direction radiale du bandage pneumatique ;
au moins une nappe de carcasse (206) incluant : une partie de corps (206b) s'étendant toroïdalement de la partie de bande de roulement (1), à travers la partie de flanc (2), vers la partie de talon (3) ; et une partie pliée (206c) connectée à la partie de corps (206b) et pliée autour de la partie de talon (3) ; et
une ceinture (8) agencée sur la périphérie externe de la nappe de carcasse (206) ;
**caractérisé en ce que** :
au moins une partie de la partie de flanc (2 ; 102) inclut : une couche de gomme de prévention de taches (11 ; 111,112a) ne contenant pas d'antioxydant ; et une couche de peinture (12) adjacente à la couche de gomme de prévention de taches (11 ; 111, 112a) et exposée à une surface externe de la partie de flanc (2 ; 102) ;
une extrémité la plus externe (12a), dans la direction radiale du bandage pneumatique, de la couche de peinture (12) est située à l'écart d'une pointe de talon (3a), vers l'extérieur, dans la direction radiale du bandage pneumatique, à une distance représentant 65% ou plus d'une hauteur de section transversale du bandage pneumatique ;
une extrémité la plus externe (11a), dans la direction radiale du bandage pneumatique, de la couche de gomme de prévention de taches (11 ; 111, 112a) est située vers l'extérieur, dans la direction radiale du bandage pneumatique, par rapport à l'extrémité la plus externe (12a), dans la direction radiale du bandage pneumatique, de la couche de peinture (12) ; et
une extrémité pliée (206a) de la nappe de carcasse (206) chevauche la ceinture (8) dans une direction de la largeur du bandage pneumatique, et s'étend vers un côté interne dans la direction radiale du bandage pneumatique.

2. Bandage pneumatique (210) selon la revendication 1,
dans lequel l'extrémité pliée (206a) de la nappe de carcasse (206) est située vers l'extérieur, dans la direction radiale du bandage pneumatique, par rapport à l'extrémité la plus externe (12a), dans la direction radiale du bandage pneumatique, de la couche de peinture (12) ou située vers l'intérieur, dans la direction radiale du bandage pneumatique, par rapport à une extrémité la plus interne (12b), dans la direction radiale du bandage pneumatique, de la couche de peinture (12).

3. Bandage pneumatique (210) selon les revendications 1 ou 2,
dans lequel la partie de talon (3) inclut un bourrage sur tringle (205) ; et
une extrémité la plus externe (205a), dans la direction radiale du bandage pneumatique, du bourrage sur tringle (205) est disposée vers l'intérieur, dans la direction radiale du bandage pneumatique, par rapport à une extrémité la plus interne (12b), dans la direction radiale du bandage pneumatique, de la couche de peinture (12).

4. Bandage pneumatique (10 ; 110 ; 210) selon l'une quelconque des revendications 1 à 3,
dans lequel l'extrémité la plus externe (12a), dans la direction radiale du bandage pneumatique, de la couche de peinture (12) est située à l'écart d'une extrémité la plus externe, dans la direction radiale du bandage pneumatique, de la partie de bande de roulement (1), vers l'intérieur, dans la direction radiale du bandage pneumatique, de 8 mm ou plus.

5. Bandage pneumatique (10 ; 110 ; 210) selon l'une quelconque des revendications 1 à 4,
dans lequel l'extrémité la plus externe (11a), dans la direction radiale du bandage pneumatique, de la couche de gomme de prévention de taches (11 ; 111) est située vers l'intérieur, dans la direction radiale du bandage pneumatique, par rapport à une extrémité de contact au sol (Pt) de la bande de roulement.

6. Bandage pneumatique (10 ; 110 ; 210) selon l'une quelconque des revendications 1 à 5,
dans lequel une longueur périphérique entre l'extrémité la plus externe (11a), dans la direction radiale du bandage pneumatique, de la couche de gomme de prévention de taches (11 ; 111, 112a) et l'extrémité la plus externe (12a), dans la direction radiale du bandage pneumatique, de la couche de peinture (12), le long d'une surface externe de la couche de gomme de prévention de taches (11 ; 111, 112a), dans une section transversale dans la direction de la largeur du bandage pneumatique, correspond à 10 mm ou plus.

7. Bandage pneumatique (10 ; 110 ; 210) selon l'une quelconque des revendications 1 à 6,
dans lequel une extrémité la plus interne, (12b), dans la direction radiale du bandage pneumatique, de la couche de peinture (12) est agencée vers l'intérieur, dans la direction radiale du bandage pneumatique, par rapport à une position à largeur maximale (Pw) du bandage pneumatique ; et
une extrémité la plus interne (11b), dans la direction radiale du bandage pneumatique, de la couche de gomme de prévention de taches (11 ; 111) est agencée vers l'intérieur, dans la direction radiale du bandage pneumatique, par rapport à l'extrémité la plus interne (12b), dans la direction radiale du bandage pneumatique, de la couche de peinture (12).
